Europäisches Patentamt

European Patent Office

Office européen des brevets

(11) Veröffentlichungsnummer: **0 050 161**
**B1**

(19)

## (12) EUROPÄISCHE PATENTSCHRIFT

(45) Veröffentlichungstag der Patentschrift:
**04.01.84**

(21) Anmeldenummer: **80106287.8**

(22) Anmeldetag: **16.10.80**

(51) Int. Cl.³: **A 22 C 13/02**

(54) Vorrichtung zum axialen Raffen von Kunststoffschlauch, insbesondere Kunstdarm für die Wurstherstellung.

(43) Veröffentlichungstag der Anmeldung:
**28.04.82 Patentblatt 82/17**

(45) Bekanntmachung des Hinweises auf die Patenterteilung:
**04.01.84 Patentblatt 84/1**

(84) Benannte Vertragsstaaten:
**AT BE CH FR GB IT LI NL SE**

(56) Entgegenhaltungen:
**CH - A - 452 382**
**DE - A - 2 729 572**
**FR - A - 1 470 243**
**FR - A - 2 083 748**

(73) Patentinhaber: **Kollross, Günter, Am Wallerstädter Weg 20, D-6080 Gross Gerau-Dornheim (DE)**

(72) Erfinder: **Kollross, Günter, Am Wallerstädter Weg 20, D-6080 Gross Gerau-Dornheim (DE)**

(74) Vertreter: **Beyer, Werner, Dipl.-Ing., Staufenstrasse 36, II P.O. Box 174109, D-6000 Frankfurt/Main (DE)**

# Vorrichtung zum axialen Raffen von Kunststoffschlauch, insbesondere Kunstdarm für die Wurstherstellung

Die Erfindung betrifft eine Vorrichtung zum axialen Raffen von Kunststoffschlauch, insbesondere Kunstdarm für die Wurstherstellung, mit einer Anzahl an einem schaltbaren und axial verschiebbaren Revolver achsparallel angeordneter Raffrohre, die fortgesetzt vor und in ein ortsfestes Raffwerkzeug bewegbar sind, von welchem der über das freie Rohrende zugeführte Schlauch gegen einen auf jedem Raffrohr angeordneten Anschlag unter Bildung einer Raupe zusammenschiebbar ist.

Derartige Vorrichtungen dienen der Automatisierung der Herstellung von Schlauchraumen, wie sie vor allem auf Füllautomaten in Wurstfabriken und Grossfleischereien weiter verwendet werden.

Bei den bekannten Vorrichtungen der eingangs genannten Art sind die Anschläge, gegen welche die Raupen auf den Raffrohren gerafft werden, fest auf diesen Rohren nahe deren Einspannenden am Revolver angeordnet, und der Revolver wird vor Beginn eines jeden Raffvorgangs soweit gegen das Raffwerkzeug angefahren, dass der Anschlag des in die Raffstellung geschalteten Rohrs unmittelbar hinter dem Raffwerkzeug steht. Während des Raffens wird dann der Revolver gesteuert zurückgefahren und muss schliesslich, unabhängig von der gewünschten Raupenlänge, mit dem die neue Raupe tragenden Rohr vollends aus dem Bereich des Raffwerkzeugs herausgefahren werden, um den Revolver zur Bereitstellung des nächsten Raffrohres weiterschalten zu können. Dadurch ergeben sich neben der reinen Raffzeit beträchtliche Totzeiten, und es müssen bei jedem Raffzyklus grosse Massen in Gestalt eines Revolvers mit allen davon getragenen Raffrohren jedesmal über nahezu die volle Rohrlänge hin- und hergeschoben werden, was mit hohem Energieverbrauch verbunden ist. Von besonderem Nachteil ist ferner der Umstand, dass nach dem Weiterschalten zusätzliche Behandlungen der fertigen Raupen insbesondere ein nachfolgendes axiales Zusammenpressen nur schwierig und mit erheblich konstruktivem Aufwand durchführbar sind, da die die weitergeschalteten Raupen tragenden Rohre ständig mit dem Revolver in axialer Bewegung sind (DE-A-27 29 57 2).

Zur Vermeidung des letzteren Nachteils ist es auch bereits bekannt, an Stelle des Revolvers das Raffwerkzeug während des Raffens zu verfahren. Jedoch treten hierbei die gleichen Totzeiten auf (FR-A-2083748).

Es sind auch Einrichtungen bekannt, bei denen ein einziges Raffrohr wechselweise an seinem dem Raffwerkzeug entgegengesetzten Ende und einer zwischen den Enden gelegenen Stelle erfassbar und auf diesem Wegen die gegen einen zurückweichenden Anschlag geraffte Raupe nach Abtrennung vom Schlauchstrang mit Hilfe einer besonderen Abstreifeinrichtung auf ein axial anschliessendes Transportrohr dann verschiebbar ist, auf dem die Raupe weiterbehandelt oder mit Hilfe eines mehrere solche Transportrohre tragenden Revolvers einer anderen Stelle zur Weiterbehandlung zugeführt wird. Derartige Einrichtungen sind jedoch äusserst aufwendig in ihrer Konstruktion, und das Abschieben der Raupen vom Raffrohr auf das Transportrohr birgt die Gefahr von Verletzungen des Schlauchmaterials (CH-A-452382).

Der Erfindung liegt die Aufgabe zugrunde, eine Einrichtung der eingangs genannten Art derart weiterzubilden, dass sie unter möglichst schonender Behandlung des Schlauchmaterials mit wesentlich geringeren Totzeiten als die bekannten Vorrichtungen auskommt und gleichzeitig auf einfachem Wege eine Weiterbehandlung der Raupen an anderer Stelle mit geringem konstruktivem Aufwand gestattet.

Erfindungsgemäss wird diese Aufgabe dadurch gelöst, dass der Revolver mit den Raffrohren während der Raupenbildung still steht und jedes Raffrohr einen darauf axial verschieblichen Anschlag trägt, der bei der Raupenbildung gesteuert zurückbewegbar ist.

Vorzugsweise ist der Verschiebeweg des Revolvers auf die Strecke beschränkt, die das beim Schalten des Revolvers jeweils vor das Raffwerkzeug gebrachte Raffrohr bis zum Eintritt seines freien Endes in den Bereich des Raffwerkzeugs benötigt. Der Verschiebeweg des Revolvers ist demzufolge äusserst kurz, und es braucht nur der Anschlag des in Raffstellung befindlichen Rohrs bis gegen das Raffwerkzeug gefahren zu werden, was äusserst schnell geschehen kann und nur geringe Kräfte erfordert. Demgegenüber stehen die übrigen Raffrohre während des Raffvorgangs still, und die darauf befindlichen Raupen können dort auf einfache Weise weiterbehandelt bzw. abgezogen werden.

Um ein Flattern des freien Raffrohrendes beim Raffen zu verhindern, ist nach einem weiteren Merkmal zur vorteilhaften Ausgestaltung der Erfindung das in das Raffwerkzeug eingefahrene Raffrohr während der Raupenbildung zweckmässig von Stabilisierungsmitteln radial über die Raupe erfassbar, die vorzugsweise von radial gegen die Raupe anstellbaren Führungsrollen gebildet sind. Diese Massnahme lässt sich konstruktiv besonders vorteilhaft dadurch verwirklichen, dass zwei mit Rinnenprofil ausgebildete Führungsrollen vorgesehen und an von einem Kraftzylinder gegeneinander verschwenkbaren Hebeln gelagert sind.

Da die Hauptzeit eines jeden Raffzyklus von der Zeitdauer des Raffvorgangs bestimmt ist, während welchem alle Raffrohre still stehen, kann die Weiterbehandlung der inzwischen weitergeschalteten Raupe die insbesondere ein Nachpressen und das Abschieben von dem sie tragenden Rohr an einer einzigen Stelle erfolgen, so dass es in weiter vorteilhafter Ausgestaltung genügt, wenn der Revolver zwei Raffrohre trägt und um 180° schaltbar ist. Dadurch wird die erfindungsgemässe Vorrichtung weiter vereinfacht.

Zur Vervollständigung der Automatisierung ist es weiterhin zweckmässig, dem Raffwerkzeug eine Schneideinrichtung nachzuordnen, durch welche die fertige Raupe unmittelbar hinter dem Raffwerkzeug vom Schlauchstrang abtrennbar ist, bevor der Revolver weitergeschaltet wird. Eine solche Schneideinrichtung wird vorzugsweise von einer motorisch antreibbaren Schneidscheibe gebildet, die nach dem Herausfahren des Raffrohres aus dem Werkzeug quer durch die Raupe hindurchbewegbar ist.

Der verhältnismässig kurze Hub des Revolvers, der zum Einfahren des mit dem Raffwerkzeug fluchtenden Rohr in dieses benötigt wird, kann weiterhin dazu verwendet werden, gegenüber dem freien Ende eines anderen Raffrohrs ein feststehendes Widerlager anzuordnen und die fertige Raupe nach dem Weiterschalten des Revolvers mit Hilfe des Anschlags gegen dieses Widerlager axial zusammenzupressen. Zweckmässig ist dieses Widerlager von zwei sich nach dem Pressvorgang öffnenden und dadurch das Abschieben der Raupe vom Raffrohr mit Hilfe des Anschlags gestattenden Anschlagbacken gebildet, hinter denen eine Raupenaufnahme angeordnet sein kann, mit welcher die Raupe einer Einrichtung zum Abdrehen des einen Raupenendes zuführbar ist.

Ein besonderes Merkmal zur konstruktiven Ausgestaltung der erfindungsgemässen Vorrichtung besteht darin, dass der auf jedem Raffrohr befindliche Anschlag von einer an seinem Ende konisch verjüngten Hülse gebildet ist, die in der Raffstellung von einem längs des Raffrohrs gesteuert beweglichen Mitnehmer erfassbar ist. Vorzugsweise ist dieser Mitnehmer von zwei in eine Ringnut der Hülse entgegengesetzt zueinander verschwenkbaren Klauenhebeln gebildet, die an einem parallel zu dem Raffrohr von einem Hydraulikzylinder verschieblichen Schlitten gelagert und von einem weiteren Kraftzylinder betätigbar sind. Mit Hilfe des Hydraulikzylinders ist es möglich, die Rücklaufbewegung des Anschlags beim Raffen in genauer Übereinstimmung mit der Raupenbildung zu steuern und dadurch das Schlauchmaterial mit Hilfe des Raffwerkzeugs in engen Falten auf dem Raffrohr zusammenzuschieben, die praktisch frei von Lufteinflüssen sind. Dadurch wird beim Raffen selbst bereits eine hohe Faltdichte erreicht und eine kompakte Raupe geschaffen, die nach der Abtrennung vom Schlauchstrang ein Weiterschalten des Revolvers kein merkliches Bestreben zu einer erneuten Ausdehnung besitzt. In entsprechender Weise kann für den Pressvorgang ein weiterer, von einem Kraftzylinder verschieblicher Schlitten mit einem quer zu dessen Verschieberichtung gesteuert beweglichen Mitnehmer vorgesehen sein, der in der Pressstellung des Raffrohrs in Eingriff mit der Ringnut der Anschlaghülse verschiebbar ist.

Die Verschiebung des Revolvers zwischen seinen beiden Endstellungen kann grundsätzlich auf beliebigem Wege erfolgen. Zweckmässig ist jedoch auch für diese Verschiebebewegung ein doppelt wirkender Kraftzylinder vorgesehen.

Ein bevorzugtes Ausführungsbeispiel einer Vorrichtung nach der Erfindung wird nachstehend in Verbindung mit der Zeichnung näher erläutert. Es zeigen:

Fig. 1 eine Draufsicht auf die auf einem dort nicht gezeigten Maschinenbett angeordnete Vorrichtung,

Fig. 2 eine Stirnansicht des Revolverkopfs sowie der Gegenhalterstation und der Pressstation in Richtung der Pfeile II–II in Fig. 1,

Fig. 3 eine Stirnansicht der Raff- und Abstützstation und des Presswiderlagers in Richtung der Pfeile III–III in Fig. 1,

Fig. 4 eine Seitenansicht der Abstützstation (ohne die Raffstation) in Richtung der Pfeile IV–IV in Fig. 3,

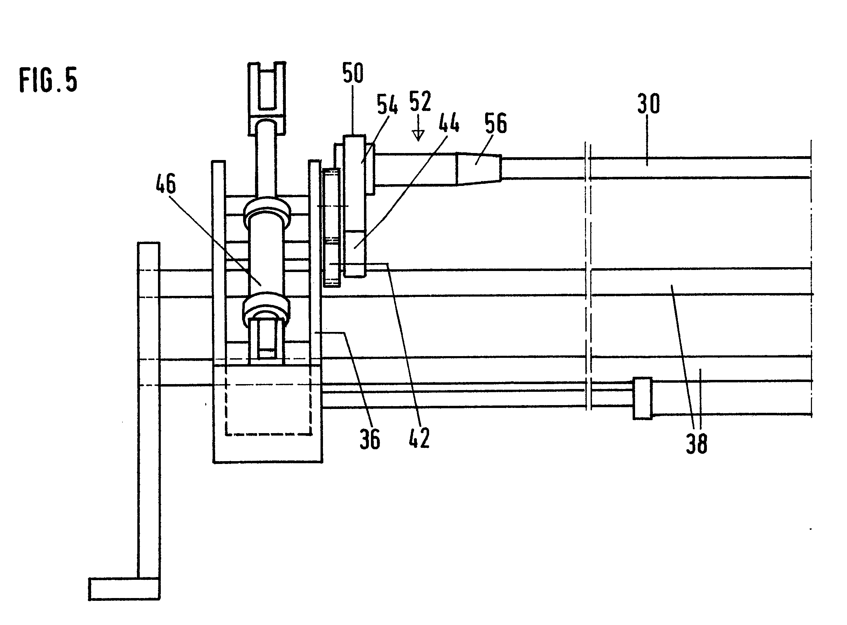

Fig. 5 eine Seitenansicht auf die Gegenhalterstation in Richtung der Pfeile V–V in Fig. 2,

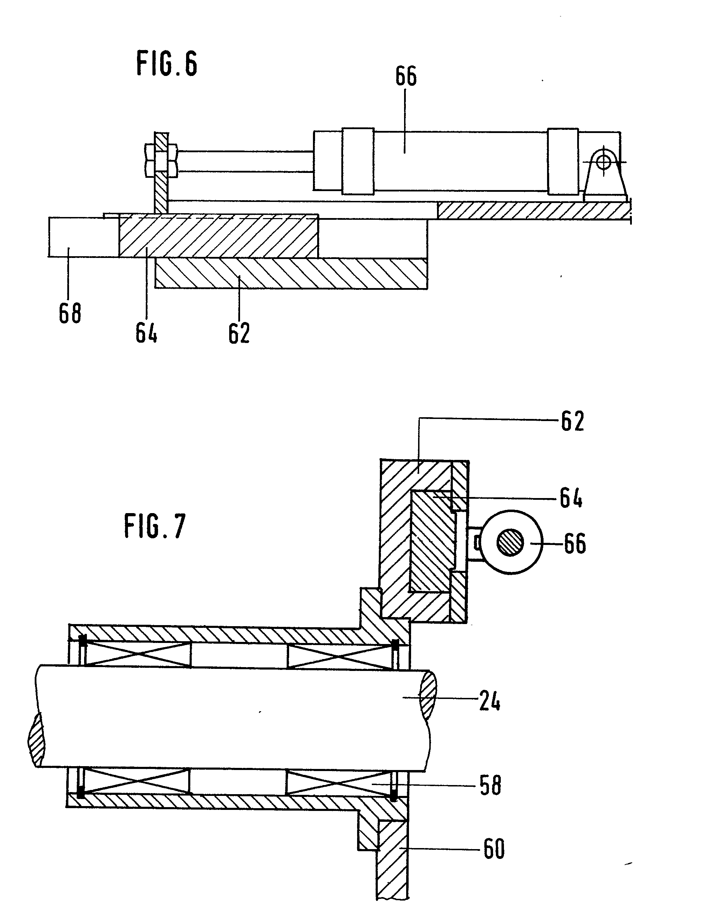

Fig. 6 einen Querschnitt durch die Pressstation nach Linie VI–VI in Fig. 2 und

Fig. 7 einen weiteren Querschnitt durch die Pressstation nach Linie VII–VII in Fig. 2.

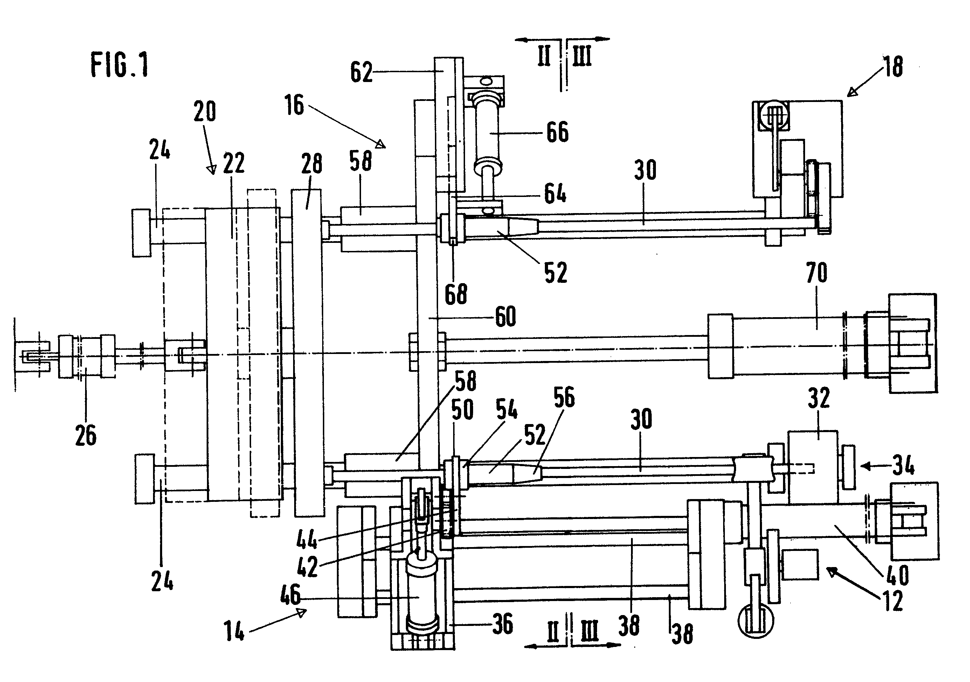

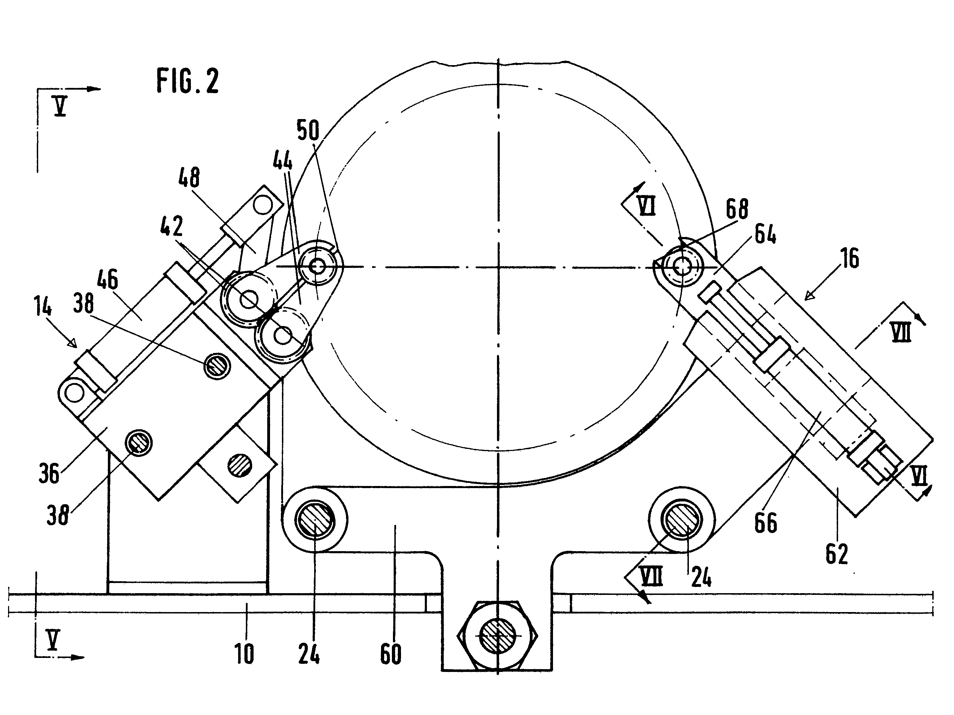

Die in den Figuren 1–3 gezeigte Vorrichtung besteht aus vier auf einem Maschinenbett 10 angeordneten Hauptkomponenten, nämlich

einer Raff- und Abstützstation 12, einer Gegenhalterstation 14, einer Pressstation 16 und einem Presswiderlager 18.

Die Raff- und Abstützstation 12 und die Gegenhalterstation 14 sind auf der einen Seite und die Pressstation 16 und das Presswiderlager 18 auf der anderen Seite der Längsmittelebene der Vorrichtung angeordent, in der sich die Drehachse eines schrittweise um 180° schaltbaren Revolvers 20 befindet, dessen einen (nicht gezeigten) pneumatischen Schaltantrieb enthaltendes Getriebegehäuse 22 auf zwei symmetrisch zur Längsrichtung der Vorrichtung und parallel zueinander am Maschinenbett 10 mittels geeigneter Konsolen befestigten Führungsstangen 24 von einem pneumatischen Kraftzylinder 26 zwischen einer in Fig. 1 gestrichelt angedeuteten «Schaltstellung» und einer dort ausgezogen dargestellten «Arbeitsstellung» verschieblich ist.

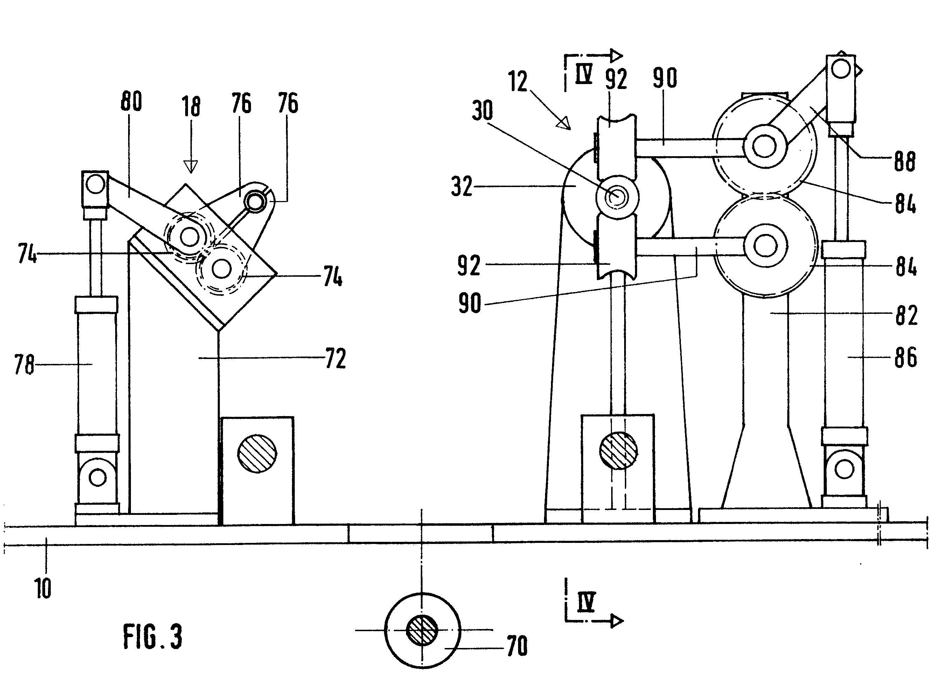

Der als Scheibe 28 ausgebildete drehbare Teil des Revolvers 20 trägt an diametral gegenüberliegenden Stellen zwei sich parallel zueinander erstreckende Raffrohre 30 geeigneten Durchmessers zur Aufnahme der aus dem zu raffenden Schlauchmaterial in an sich bekannter Weise von einem Raffwerkzeug herzustellenden Schlauchraupen. Das Raffwerkzeug ist nur symbolisch angedeutet (Fig. 1 und 3) und kann beispielsweise aus drei um die Raffrohrachse verteilten antreibbaren Profilrollen oder Zahnriemen oder einer um die Raffrohrachse drehend angetriebenen Schneckenhülse bestehen. Die Lage des Raffwerkzeugs 32 im Verhältnis zum Revolver 20 ist so getroffen, dass das Ende des einen Raffrohrs in der «Schaltstellung» des Revolvers frei vor dem Raffwerkzeug steht und in der Arbeitsstellung das Raffwerkzeug gerade durchsetzt, ohne wesentlich über dieses hinaus vorzustehen. Der Verschiebeweg des Revolvers 20 ist somit verhältnismässig kurz und kann beispielsweise etwa 50 mm betragen.

Das zu raffende Schlauchmaterial wird dem Raffwerkzeug 32 in Richtung des Pfeils 34 in bekannter Weise, beispielsweise über (nicht gezeigte) Quetsch- und Transportwalzen, zugeführt und durch über das Raffrohr 30 zugeführte Druckluft aufgebläht. Das Raffwerkzeug 32 bewegt das Schlauchmaterial unter Faltenbildung auf dem Raffrohr 30 weiter vorwärts, wo das vordere Ende der hierbei gebildeten Raupe mit Hilfe der nachstehend erläuterten Gegenhalterstation 14 abgestützt wird.

Die Gegenhalterstation 14 weist einen Schlitten 36 auf, der auf zwei am Maschinenbett mittels geeigneter Konsolen befestigter Führungsstangen 38 gelagert und mittels eines doppelt wirkenden hydraulichen Kraftzylinders 40 längs dem benachbarten Raffrohr 30 verfahrbar ist. An dem Schlitten 36 sind zwei über ein Zahnradpaar 42 gegenläufig gekuppelte Klauenhebel 44 schwenkbar gelagert, die von einem Kraftzylinder 46 über eine Schwinge 48 antreibbar sind und eine Zange 50 zum Erfassen einer auf jedem Raffrohr 30 längsverschieblichen Gegenhalterhülse 52 in einer Ringnut 54 am verdickten Ende derselben bilden.

Das andere Ende der Gegenhalterhülse ist bei 56 abgerundet und bildet die oben erwähnte Abstützung für das vordere Raupenende beim Raffen, wie weiter unten noch näher erläutert werden wird.

Die Pressstation 16 besteht aus einer auf den Führungsschienen 24 vorzugsweise mit Kugelumlaufbuchsen 58 verschieblichen Schlittenplatte 60, die ein Gehäuse 62 für einen Schieber 64 trägt. Ein doppelt wirkender pneumatischer Kraftzylinder 66 ist zwischen dem Gehäuse 62 und dem Schieber 64 angeordnet und vermag das mit einer Maulöffnung 68 versehene Ende des Schiebers 64 in Eingriff mit der Ringnut 54 der auf dem dortigen Raffrohr befindlichen Gegenhalterhülse 52 zu bringen. An der Schlittenplatte 60 greift die Kolbenstange eines doppelt wirkenden hydraulischen Kraftzylinders 70 an, dessen Gehäuse am Maschinenbett 10 festgelegt ist. Mit Hilfe dieses Kraftzylinders 70 kann somit die vom Schieber 64 erfasste Gegenhalterhülse 52 längs dem Raffrohr 30 zum Pressen und späteren Abschieben einer auf dem Raffrohr befindlichen Schlauchraupe bewegt werden.

Zur Aufnahme der Presskraft dient das Presswiderlager 18, das gemäss der Darstellung in Fig. 3 aus einer Konsole 72 besteht, an der zwei über ein Zahnradpaar 74 gegenläufig gekuppelte Scherenhebel 76 schwenkbar gelagert und von einem doppelt wirkenden pneumatischen Kraftzylinder 78 über eine Schwinge 80 zwischen einer Offenstellung und einer Schliessstellung verschwenkbar sind. Die Scherenhebel 76 sind mit gegeneinander weisenden Maulöffnungen versehen, die in der Schliessstellung einen Durchlass von kleinerem Durchmesser als dem Innendurchmesser der Schlauchraupe bilden, so dass sich bei der Bewegung der Pressstation 16 mit der davon erfassten Gegenhalterhülse 52 gegen das Presswiderlager 18 die auf dem Raffrohr 30 befindliche Schlauchraupe gegen die Scherenhebel 76 abzustützen vermag und dadurch wirksam zusammengepresst wird. Der Schwenkwinkel der Scherenhebel 76 ist so bemessen, dass sie in der Offenstellung die Schlauchraupe hindurchtreten lassen und diese von der Pressstation vom Raffrohr 30 abgeschoben und beispielsweise einer (nicht gezeigten) Verpackungseinrichtung oder Abdreheinrichtung zugeführt werden kann, die sich an das freie Ende des Raffrohrs 30 hinter den Scherenhebeln 76 anschliesst.

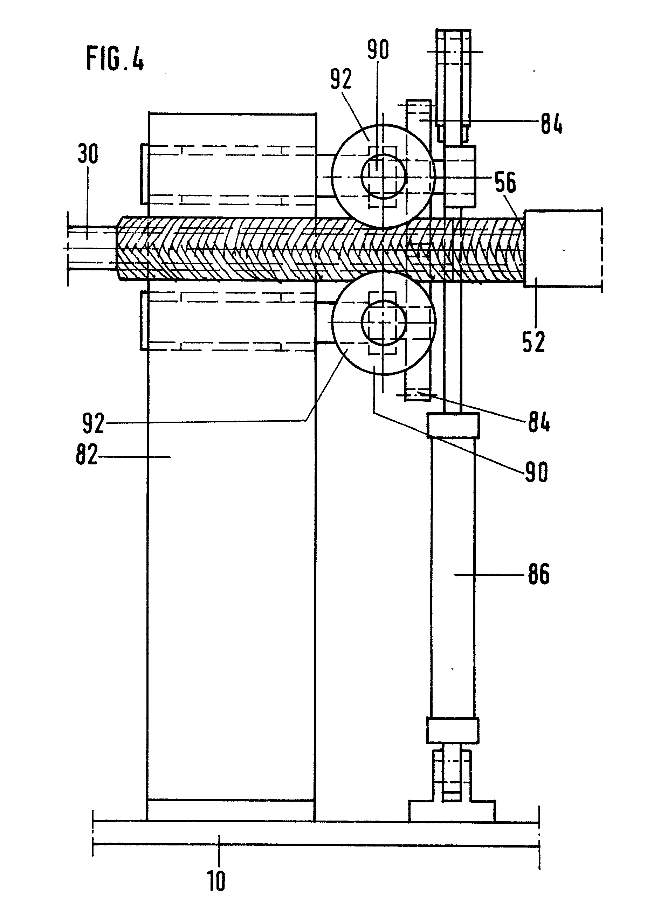

Schliesslich weist die Raff- und Abstützstation 12 ausser dem Raffwerkzeug 32 eine Abstützeinrichtung auf, die, wie die Figuren 3 und 4 zeigen, aus einem auf dem Maschinenbett 10 angebrachten Ständer 82 besteht, an welchem übereinander zwei über ein Zahnradpaar 84 gekuppelte und mittels eines Kraftzylinders 86 über eine Schwinge 88 gegensinnig verschwenkbare Rollenhebel 90 gelagert sind. Die freien Enden der Rollenhebel 90 lagern je eine Profilrolle 92, die sich bei der Verschwenkung der Rollenhebel 90 in die horizontale Lagen gegen die Ober- bzw. Unterseite der vom Raffwerkzeug 32 auf dem Raffrohr 30 hergestellten Schlauchraupe abstützt und dadurch das Raffrohr 30 zentriert.

Der pneumatische Schaltantrieb für den Revolver 20, die hydraulischen Kraftzylinder 40 und 70 sowie die pneumatischen Kraftzylinder 46, 66, 78 und 86 sind über Magnetventile betätigbar, die ihrerseits von einer elektrischen Folgesteuerung unter Verwendung von End- und Impulsschaltern gesteuert werden. Der grundsätzliche Aufbau solcher Steuerungen ist bekannt und wird im vorliegenden Fall derart ausgelegt, dass sich der nachfolgende Funktionsablauf ergibt:

Es sei angenommen, dass die einzelnen Komponenten der vorgeschriebenen Vorrichtung die folgende Ausgangsstellung einnehmen:

der Revolver 20 befindet sich in der in Fig. 1 gestrichelt angedeuteten Schaltstellung;

die Profilrollen 92 sind ausser Eingriff mit dem Raffrohr 30;

der Pressschieber 64 ist in das Gehäuse 62 eingefahren;

der Gegenhalterschlitten 36 und die Schlittenplatte 60 befinden sich in zurückgezogener Stellung nahe dem Revolverkopf 20;

die Gegenhalterhülsen 52 befinden sich gleichfalls in zurückgezogener Stellung dergestalt, dass die Gegenhalterzange 50 die dortige Gegenhalterhülse 52 in der Ringnut 54 zu erfassen vermag, während die Gegenhalterhülse 52 auf dem anderen Raffrohr im Verhältnis zum Pressschieber 64 um den Hub des pneumatischen Kraftzylinders 26 zum Revolver 20 hin versetzt ist.

Wird nun die Steuerung eingeschaltet bzw. ein neuer Arbeitszyklus ausgelöst, schaltet zunächst der Revolver 20 um 180° und bringt ein leeres Raffrohr 30 vor, das Raffwerkzeug 32. Hierauf schliesst die Gegenhalterschere 50 und erfasst die Gegenhalterhülse 52 auf dem leeren Raffrohr 30. Sofort darauf wird der hydraulische Kraftzylinder 40 nach rechts mit Bezug auf Fig. 1 eingeschaltet und verschiebt zunächst mit Eilvorschub und dann verlangsamtem Vorschub die Gegenhalterhülse 52 auf dem Raffrohr 30 bis unmittelbar vor das Raffwerkzeug 32. In der letzten Phase dieser Bewegung wird der pneumatische Kraftzylinder 26 betätigt und bringt den Revolver 20 mit den Raffrohren 30 in die Arbeitsstellung, in der sich das leere Raffrohr 26 mit seinem Ende durch das Raffwerkzeug 32 erstreckt.

Sobald diese Stellung erreicht ist, wird das Raffwerkzeug 32 eingeschaltet, und gleichzeitig wird der hydraulische Kraftzylinder 42 entgegengesetzt mit Arbeitsvorschub betätigt, welcher so bemessen ist, dass die in der Gegenhalterstation 14 befindliche Gegenhalterhülse 52 entsprechend der Raupenbildung auf dem Raffrohr 30 mit solcher Geschwindigkeit zurückweicht, dass die Raupe ständig unter dem erforderlichen Gegendruck zur Bildung einer engen Faltenlegung gehalten wird.

Sobald die Gegenhalterhülse 52 den Bereich der Abstützeinrichtung verlassen hat, wird der pneumatische Kraftzylinder 86 betätigt und verschwenkt die Rollenhebel 90 mit den Rollen 92 in Anlage gegen die auf dem Raffrohr 30 gebildete Raupe, wodurch das Raffrohr mit der Raupe während der gesamten weiteren Raupenbildung wirksam zentriert wird.

Nach Erreichen der gewünschten Raupenlänge, die von der einstellbaren Lage eines vom Gegenhalterschlitten 36 überfahrbaren Impulsschalters abhängig ist, wird das Raffwerkzeug 32 abgeschaltet und der pneumatische Kraftzylinder 26 betätigt, der den Revolver 20 mit dem die soeben hergestellte Raupe tragenden Raffrohr 30 aus dem Raffwerkzeug 32 herauszieht, wodurch das Raupenende zwischen den Rollen 92 und dem Raffwerkzeug 32 etwas aufgezogen wird. Während die Gegenhalterstation 14 mit dem Gegenhalter 52 durch fortdauernde Betätigung des hydraulischen Kraftzylinders 40 weiter in Richtung zum Revolverkopf 20 in ihre Endstellung läuft, in welcher die Gegenhalterzange 50 öffnet, durchtrennt eine (nicht gezeigte) Schneideinrichtung die Raupe unmittelbar hinter dem Raffwerkzeug, und die Rollenhebel 90 mit den Rollen werden durch umgekehrte Betätigung des pneumatischen Kraftzylinders 86 nach aufwärts bzw. abwärts ausser Eingriff mit der abgeschnittenen Raupe verschwenkt. Damit ist der Arbeitszyklus auf der Raffseite der Vorrichtung beendet, und die auf dem Raffrohr 30 hergestellte neue Raupe wird zu Beginn des nächsten Arbeitszyklus durch Schalten des Revolvers 20 auf die Pressseite der Vorrichtung gebracht. Auf letzterer laufen während eines Arbeitszyklus folgende Vorgänge ab:

Nach dem Schalten des Revolvers 20 schliesst zunächst das Presswiderlager 18 mit Hilfe des Kraftzylinders 78, so dass beim anschliessenden Vorschieben des Revolvers 20 das nun auf der Presseite befindliche Raffrohr 30 mit dem abgeschnittenen Ende der Schlauchraupe gegen das geschlossene Widerlager in Anlage gelangt.

Durch das Vorschieben des Revolvers 20 in die Arbeitsstellung ist die Ringnut 54 der Gegenhalterhülse 52 in den Eingriffsbereich der Maulöffnung 68 des Pressschiebers 64 gelangt, und dieser wird durch Betätigen des Kraftzylinders 66 aus dem Gehäuse 62 herausgeschoben und in Eingriff mit der Gegenhalterhülse 52 gebracht. Hieraufhin wird der hydraulische Kraftzylinder 70 mit Druckflüssigkeit beaufschlagt und fährt die Pressstation 16 mit der Gegenhalterhülse 52 längs dem Raffrohr 30 gegen die darauf befindliche Schlauchraupe, wodurch diese bei zunächst geschlossenem Presswiderlager 18 auf das gewünschte Mass zusammengepresst wird. Sobald das gewünschte Pressmass erreicht ist, wird von der Pressstation 16 ein Impulsschalter betätigt, der die Öffnung des Presswiderlagers 18 veranlasst. Dadurch wird mit der Weiterbewegung der Pressstation 16 längs dem Raffrohr 30 die Schlauchraupe vom Raffrohr abgestreift und beispielsweise an eine (nicht gezeigte) Verpakkungseinrichtung oder Abdreheinrichtung übergeben.

Sobald die Pressstation 16 mit der Gegenhalterhülse 52 am freien Ende des Raffrohrs 30 angelangt ist, wird der hydraulische Kraftzylinder 70 umgesteuert und fährt die Pressstation 16 im Eilgang in ihre Ausgangslage zurück, in welcher der Presschieber 64 mit Hilfe des pneumatischen Kraftzylinders 66 aus dem Eingriff mit der Gegenhalterhülse 52 zurückgezogen wird. Dieser Vorgang ist beendet, bevor der Revolver 20 vom Kraftzylinder 26 wieder in seine Schaltstellung gemäss vorstehender Beschreibung zurückgezogen wird, so dass bei dieser Rückzugsbewegung die vom Pressenschieber 64 freigegebene Gegenhalterhülse 52 mit dem Revolver 20 in die zum Pressenschieber 64 axial versetzte Ausgangsstellung zurückkehrt.

Wie ersichtlich, findet somit während des Raffens auf dem einen Raffrohr das Pressen der zuvor gerafften Raupe und das Abschieben derselben auf bzw. von dem anderen Raffrohr in entgegengesetzter Richtung statt. Da der Raffvorgang ohnehin die grösste Zeitspanne innerhalb des Arbeitszyklus einnimmt, kann dieser für das Pressen und Abschieben auf dem anderen Raffrohr ohne eine Verlängerung des Arbeitszyklus voll genutzt werden. Die Länge des Arbeitszyklus bestimmt sich somit durch die Schaltzeit für den Revolver,

die Vorschubzeit für die Gegenhalterhülse zuerst im Eil- und dann im Arbeitsvorschub bis vor das Raffwerkzeug,

die Raffzeit,

die Zeit für die Rückzugsbewegung des Revolvers nach dem Raffen,

die Abtrennzeit und

die Zeit zum Öffnen der Abstützeinrichtung.

Von diesen Zeiten ist die Raffzeit die längste, während die übrigen Zeiten vergleichsweise kurz sind, so dass die Gesamtzeit eines Arbeitszyklus weniger als das zweifache der eigentlichen Raffzeit beträgt. Während der vorgenannten Zeiten laufen das Pressen und Abschieben sowie das Zurückziehen der Pressstation auf der anderen Seite der Vorrichtung ohne zusätzlichen Zeitbedarf ab, wobei das Pressen und Abschieben in derselben Schaltstellung des Revolvers erfolgen, so dass dieser, wie im Ausführungsbeispiel dargestellt und beschrieben, nur mit zwei um 180° zueinander versetzten Raffrohren bestückt zu sein braucht. Die Bestückung mit mehr Raffrohren ist selbstverständlich möglich.

**Patentansprüche**

1. Vorrichtung zum axialen Raffen von Kunststoffschlauch, insbesondere Kunstdarm für die Wurstherstellung, mit einer Anzahl an einem schaltbaren und axial verschiebbaren Revolver (20) achsparallel angeordneter Raffrohre (30), die fortgesetzt nacheinander vor und in ein ortsfestes Raffwerkzeug (32) bewegbar sind, von welchem der über das freie Rohrende zugeführte Schlauch gegen einen auf jedem Raffrohr (30) angeordneten Anschlag (52) unter Bildung einer Raupe zusammenschiebbar ist, dadurch gekennzeichnet, dass der Revolver (20) mit den Raffrohren (30) während der Raupenbildung still steht und jedes Raffrohr (30) einen darauf axial verschieblichen Anschlag (52) trägt, der bei der Raupenbildung gesteuert zurückbewegbar ist.

2. Vorrichtung nach Anspruch 1, dadurch gekennzeichnet, dass der Verschiebeweg des Revolvers (20) auf die Strecke beschränkt ist, die das beim Schalten des Revolvers (20) jeweils vor das Raffwerkzeug (32) gebrachte Raffrohr (32) bis zum Eintritt seines freien Endes in den Bereich des Raffwerkzeugs (32) benötigt.

3. Vorrichtung nach Anspruch 1 oder 2, dadurch gekennzeichnet, dass das in das Raffwerkzeug (32) eingefahrene Raffrohr (30) während der Raupenbildung von Stabilisierungsmitteln (92) radial über die Raupe erfassbar ist.

4. Vorrichtung nach Anspruch 3, dadurch gekennzeichnet, dass als Stabilisierungsmittel zwei mit Rinnenprofil ausgebildete Führungsrollen (92) vorgesehen und an von einem Kraftzylinder (86) gegeneinander verschwenkbaren Hebeln (90) gelagert sind.

5. Vorrichtung nach einem der vorhergehenden Ansprüche, dadurch gekennzeichnet, dass der Revolver (20) zwei Raffrohre (30) trägt und um 180° schaltbar ist.

6. Vorrichtung nach einem der vorhergehenden Ansprüche, dadurch gekennzeichnet, dass dem Raffwerkzeug (32) eine Schneideinrichtung nachgeordnet ist, durch welche die fertige Raupe unmittelbar hinter dem Raffwerkzeug vom Schlauchstrang abtrennbar ist.

7. Vorrichtung nach Anspruch 7, dadurch gekennzeichnet, dass die Schneideinrichtung von einer motorisch antreibbaren Schneidscheibe gebildet ist, die nach dem Herausfahren des Raffrohrs aus dem Raffwerkzeug (32) quer durch die Raupe hindurchbewegbar ist.

8. Vorrichtung nach einem der vorhergehenden Ansprüche, dadurch gekennzeichnet, dass die fertige Raupe in einer anderen Stellung des Revolvers (20) von dem Anschlag (52) gegen ein dem Raffrohrende gegenüberstehendes Widerlager (18) axial zusammenpressbar ist.

9. Vorrichtung nach Anspruch 9, dadurch gekennzeichnet, dass das Widerlager (18) von zwei sich nach dem Pressvorgang öffnenden und dadurch das Abschieben der Raupe vom Raffrohr (30) mit Hilfe des Anschlags (52) gestattenden Anschlagbacken (76) gebildet ist.

10. Vorrichtung nach Anspruch 9, dadurch gekennzeichnet, dass hinter den Anschlagbacken (76) eine Raupenaufnahme angeordnet ist, mittels welcher die Raupe einer Einrichtung zum Abdrehen des einen Raupenendes zuführbar ist.

11. Vorrichtung nach einem der vorhergehenden Ansprüche, dadurch gekennzeichnet, dass der auf jedem Raffrohr (30) befindliche Anschlag von einer an seinem Ende konisch verjüngten Hülse (52) gebildet ist, die in der Raffstellung von einem längs des Raffrohrs (30) gesteuert beweglichen Mitnehmer (44) erfassbar ist.

12. Vorrichtung nach Anspruch 11, dadurch gekennzeichnet, dass der Mitnehmer von zwei in eine Ringnut der Hülse (52) entgegengesetzt zueinander verschwenkbaren Klauenhebeln (44) gebildet ist, die an einem parallel zu dem Raffrohr (30) von einem Hydraulikzylinder (40) verschieblichen Schlitten gelagert und von einem weiteren Kraftzylinder (46) betätigbar sind.

13. Vorrichtung nach Anspruch 12 in Verbindung mit einem der Ansprüche 8 bis 10, gekennzeichnet durch einen weiteren, von einem Kraftzylinder (70) verschieblichen Schlitten (60) mit einem quer zu dessen Verschieberichtung gesteuert beweglichen Mitnehmer (64), der in der Pressstellung des Raffrohrs in Eingriff mit der Ringnut der Anschlaghülse (52) verschiebbar ist.

14. Vorrichtung nach einem der vorhergehenden Ansprüche, dadurch gekennzeichnet, dass der Revolverkopf (20) von wenigstens einem doppeltwirkenden Kraftzylinder (26) zwischen seinen beiden axialen Endstellungen verschieblich ist.

**Revendications**

1. Dispositif pour plisser des tubes synthétiques, notamment des boyaux artificiels pour la fabrication des saucisses comprenant plusieurs tubes de prélèvement (30), disposés parallèlement à l'axe sur un barillet (20) susceptible de tourner et de coulisser dans le sens axial, l'avant de ces tubes de prélèvement (30) étant avancé à tour de rôle pour coopérer avec un outil de prélèvement (32) monté à poste fixe et à partir duquel le boyau souple est engagé sur l'extrémité libre du tube contre une butée équipant chaque tube de prélèvement (30) pour constituer une chenille, caractérisé en ce que le barillet (20) portant les tubes de prélèvement (30) reste immobile pendant la formation de la chenille, tandis que chaque tube de prélèvement (30) porte une butée (52) susceptible de coulisser dans le sens axial, et dont le recul est commandé pendant la formation de la chenille.

2. Dispositif suivant la revendication 1, caractérisé en ce que le mouvement de coulissement du barillet (20) est limité à l'amplitude nécessaire pour que, pour chaque pas de rotation du barillet (20), le tube de prélèvement (30) présenté devant l'outil de prélèvement (32) voie son extrémité libre s'engager dans la zone d'action de l'outil de prélèvement (32).

3. Dispositif suivant l'une quelconque des revendications 1 et 2, caractérisé en ce que le tube de prélèvement (30) engagé dans l'outil de prélèvement (32) pendant la constitution de la chenille, peut être saisi dans le sens radial par-dessus la chenille, à l'aide de moyens de stabilisation (92).

4. Dispositif suivant la revendication 3, caractérisé en ce qu'on utilise comme moyens de stabilisation, deux galets de guidage (92), pourvus chacun d'une gorge en gouttière, dont les axes sont portés par des leviers (90) susceptibles de basculer l'un vers l'autre sous l'action d'un vérin (86).

5. Dispositif suivant l'une quelconque des revendications précédentes, caractérisé en ce que le barillet (20) porte deux tubes de prélèvement (30), tamdis que son pas de rotation est de 180°.

6. Dispositif suivant l'une quelconque des revendications précédentes, caractérisé en ce que l'outil de prélèvement (32) coopère avec un système de coupe à l'aide duquel la chenille terminée est tronçonnée immédiatement derrière l'outil de prélèvement.

7. Dispositif suivant la revendication 6, caractérisé en ce que le système de tronçonnage est constitué par un disque tranchant entraîné en rotation par un moteur, et qu'on déplace transversalement pour sectionner la chenille après extraction du tube de prélèvement hors de l'outil de prélèvement.

8. Dispositif suivant l'une quelconque des revendications précédentes, caractérisé en ce que la chenille terminée est comprimée dans le sens axial à une autre position du barillet (20), entre la butée (52) et un appui (18) situé face à l'extrémité du tube de prélèvement.

9. Dispositif suivant la revendication 8, caractérisé en ce que l'appui (18) est constitué par deux mâchoires (76) qui s'ouvrent après le processus de pressage, pour permettre l'évacuation par coulissement de la chenille hors du tube de prélèvement (30), à l'aide de la butée (52).

10. Dispositif suivant la revendication 8, caractérisé en ce que, derrière les mâchoires de butée (76), est disposé un poste de réfection de la chenille, au moyen duquel la chenille peut être dirigée vers un poste qui ferme par torision l'extrémité de la chenille.

11. Dispositif suivant l'une quelconque des revendications précédentes, caractérisé en ce que la butée située sur chaque tube de prélèvement (30) est constitué par une douille dont l'extrémité conique va en se rétrécissant, et qui en position de prélèvement, est saisie par un suiveur mobile (44) dont les déplacements sont commandés le long du tube de prélèvement (30).

12. Dispositif suivant la revendication 11, caractérisé en ce que le suiveur est constitué par deux leviers à mâchoire (44), opposés dans une gorge annulaire de la douille (52), et susceptibles de basculer l'un vers l'autre, tandis que ils sont portés par un chariot qu'un vérin (40) déplace parallèlement au tube de prélèvement (30), alors qu'ils sont actionnés par un autre vérin (46).

13. Dispositif suivant la revendication 12, caractérisé en ce qu'il comporte un autre chariot (66) mobile sous l'action d'un vérin (70) et comportant un suiveur (64) mobile transversalement per rapport à sa direction de coulissement, ce suiveur (64) étant susceptible de coulisser avec la douille de butée (52) dont il attaque la gorge annulaire, pendant l'opération de poussée du tube de prélèvement.

14. Dispositif suivant l'une quelconque des revendications précédentes, caractérisé en ce que le barillet (20) coulisse entre ses deux positions axiales extrêmes, sous l'action d'au moins un vérin à double effet (26).

**Claims**

1. Device for shirring of synthetic tubes, especially artificial casings for sausage making, having a plurality of shirring tubes (30) arranged axially parallel on an indexable and axially displaceable turret (20), which shirring tubes are movable continuously and one after another in front of and into a stationary shirring tool (32) from which the tubing fed over the free tube end can be pushed together against a stop member arranged on each shirring tube (30) thus forming a caterpillar, characterised in that the turret (20) with the shirring tubes (30) is stationary during caterpillar formation and each shirring tube (30) carries a stop member (52) which is axially displaceable thereon and which, during caterpillar formation, can be moved back under control.

2. Device according to claim 1 characterised in that the displacement travel of the turret (20) is limited to the distance which the shirring tube (30) respectively brought before the shirring tool (32) upon indexing of the turret (20) requires until entry of its free end into the zone of the shirring tool (32).

3. Device according to claim 1 or 2, characterised in that the shirring tube (30) moved into the shirring tool (32) during caterpillar formation can be gripped radially over the caterpillar by stabilizing means (92).

4. Device according to claim 3, characterised in that as stabilizing means there are provided two guide rollers (92) of grooved-section design and they are mounted on levers (90) which are pivotable relative to one another by a power cylinder (86).

5. Device according to one of the preceding claims characterised in that the turret (20) carries two shirring tubes (30) and can be indexed through 180°.

6. Device according to one of the preceding claims characterised in that a cutting device is disposed following the shirring tool (32) by means of which device the finished caterpillar can be separated from the tubular strand immediately behind the shirring tool.

7. Device according to claim 7 characterised in that the cutting device is formed by a cutting disc which can be motor-driven and which, after the shirring tube has moved out of the shirring tool (32) can be moved transversely through the caterpillar.

8. Device according to one of the preceding claims, characterised in that, in another position of the turret (20), the finished caterpillar can be axially pressed together by the stop member (52) against an abutment (18) situated opposite the end of the shirring tube.

9. Device according to claim 8, characterised in that the abutment (18) is formed by two stop jaws (76) which open after the pressing procedure and which thereby allow the removal of the caterpillar from the shirring tube (30) by means of the stop member (52).

10. Device according to Claim 9, characterised in that behind the stop jaws (76) there is arranged a caterpillar-receiving means by means of which the caterpillar can be fed to a device for turning off one end of the caterpillar.

11. Device according to one of the preceding Claims, characterised in that the stop member situated on each shirring tube (30) is formed by a sleeve (52) conically tapered at its end, which sleeve in the shirring position can be engaged by an entrainment member (44) controlled to move along the shirring tube (30).

12. Device according to Claim 11, characterised in that the entrainment member is formed by two claw levers (44) pivotable opposite to one another in an annular groove of the sleeve (52), which claw levers are mounted on a carriage displaceable by a hydraulic cylinder (40) parallel to the shirring tube (30) and are actuatable by a further power cylinder (46).

13. Device according to Claim 12 in combination with one of the Claims 8 to 10, characterised by a further carriage (60) which is displaceable by a power cylinder (70) and which has an entrainment member (64) which is controlled to move transversely to its displacement direction and which, in the compressing position of the shirring tube, can be shifted into engagement with the annular groove of the stop sleeve (52).

14. Device according to one of the preceding Claims, characterised in that the turret head (20) is displaceable by at least one double-acting power cylinder (26) between its two axial end positions.

FIG.1

FIG. 2

0 050 161

FIG.3

0 050 161

**FIG.4**

0 050 161

FIG.5

**FIG.6**

66

68

64 62

**FIG.7**

62

64

66

24

58

60